# FASCICULE DE BREVET EUROPEEN

(11) **EP 2 206 645 B1**
(45) Date de publication et mention de la délivrance du brevet: **21.09.2011**
(21) Numéro de dépôt: 10150044.5
(22) Date de dépôt: 04.01.2010
(51) Int. Cl.: B64C 13/50

(54) **Système de commandes de vol plus électrique à bord d'un aeronef**
Flugsteuerungssystem für "mehr elektrisch" Flugzeug
"More electric" aircraft flight control system

(30) Priorité: 08.01.2009 FR 0950081
(43) Date de publication de la demande: 14.07.2010
(73) Titulaire: Airbus Operations, 31060 Toulouse (FR)
(72) Inventeur: Fervel, Marc, 31300, TOULOUSE (FR); Gentilhomme, Alexandre, 31200, TOULOUSE (FR)
(74) Mandataire: Ilgart, Jean-Christophe

(56) Documents cités:
- US-A- 3 710 218
- US-A1- 2006 044 722
- FALEIRO LESTER: "Beyond the more electric aircraft" AEROSPACE AMERICA, vol. 47, no. 6, 1 juin 2005 (2005-06-01), pages 35-40, XP002541982 Reston USA

## Description

### DOMAINE TECHNIQUE

L'invention concerne un système de commandes de vol plus électrique à bord d'un aéronef, par exemple d'un avion.

Dans la suite, pour simplifier la description, on considère l'exemple d'un avion.

### ÉTAT DE LA TECHNIQUE ANTÉRIEURE

Les architectures de commandes de vol des avions de ligne actuels reposent sur des concepts deux ou trois circuits hydrauliques et au moins deux circuits électriques. Sur ces architectures lorsque deux actionneurs sont liés à une même surface de commande de vol, les technologies utilisées en priorité sont :
- une servocommande hydraulique associée à un actionneur électro-hydrostatique (EHA), ou
- deux actionneurs hydrauliques à sauvegarde électrique (EBHA).

Une servocommande hydraulique est un actionneur standard connecté au système hydraulique central de l'avion à travers des canalisations partant de la baie hydraulique de l'avion. Il comprend une servovanne qui dirige la pression hydraulique, fournie par les pompes hydrauliques de l'avion, pour déplacer l'axe de l'actionneur qui est connecté à une surface de commande correspondante, par exemple un aileron, une gouverne de profondeur, une gouverne de direction, ou un spoiler. Un actionneur électro-hydrostatique (EHA) est connecté au réseau électrique de l'avion. Il possède une pompe hydraulique électrique autonome, un réservoir et un accumulateur qui génère la puissance hydraulique nécessaire pour déplacer ledit axe. Cet actionneur est donc un actionneur hydraulique puisque la puissance utilisée pour déplacer l'axe est hydraulique. Toutefois, le système hydraulique étant autonome, il ne nécessite qu'une énergie électrique en provenance du réseau électrique de l'avion pour fonctionner.

Un actionneur hydraulique à sauvegarde électrique (EBHA) est un actionneur hybride qui utilise des puissances électrique et hydraulique. C'est la combinaison d'un actionneur électro-hydrostatique et d'un actionneur hydraulique standard. Il est connecté à la fois au système hydraulique central et au système électrique. La source principale de puissance est fournie par des lignes de fluides d'un système hydraulique. Il comporte un moteur électrique local et une pompe deux-voies. Dans le cas d'un défaut du système hydraulique central, le moteur électrique local et la pompe sont commutés par des signaux électriques sur une ligne de contrôle distribuée pour alimenter et contrôler l'actionneur de la même façon qu'un actionneur électro-hydrostatique.

Le document "FALEIRO LESTER: "Beyond the more electric aircraft" AEROSPACE AMERICA, vol. 47, no. 6, 1 juin 2005 (2005-06-01), pages 35-40" décrit un exemple d'un avion avec système de commandes de vol plus électrique.

Une architecture de commande de vol peut ainsi utiliser les générations de puissances suivantes :

### - Génération hydraulique

Le principe de génération hydraulique utilisé sur les avions pour générer la puissance hydraulique de deux ou trois circuits est l'utilisation de pompes hydro-mécaniques directement connectées sur la boîte d'accessoires (boîte de réduction) mise à disposition sur chacun des moteurs. Dans le cas d'une architecture commandes vol à trois circuits hydrauliques, le troisième circuit hydraulique est alimenté de façon nominale soit par une pompe électro-hydraulique soit par une pompe hydro-mécanique.

### - Génération électro-hydraulique

L'alimentation des pompes électro-hydrauliques utilisées ou potentiellement activables en vol se fait selon deux solutions techniques différentes :
- soit via un générateur fournissant une tension alternative triphasée à fréquence fixe et valeur efficace constante,
- soit depuis une barre électrique fournissant une tension continue. Dans ce cas, une électronique de puissance est nécessaire pour piloter l'alimentation des phases du moteur électrique entraînant la pompe.

Les pompes électro-hydraulique alimentées par une tension alternative triphasée à fréquence variable et valeur efficace constante et n'utilisant pas d'électronique de puissance ne sont utilisées que pour les besoins de génération hydraulique auxiliaire, l'avion étant au sol.

### - Génération électrique pour les actionneurs de commande de vol

L'alimentation des actionneurs électriques de commande de vol se fait selon différentes solutions technologiques :
- soit via une tension alternative triphasée à fréquence fixe et valeur efficace constante,
- soit via une tension alternative triphasée à fréquence variable et valeur efficace constante.

Dans les deux cas, le pilotage de la vitesse de rotation du moteur électrique de l'actionneur se fait par l'utilisation d'une électronique de puissance locale.

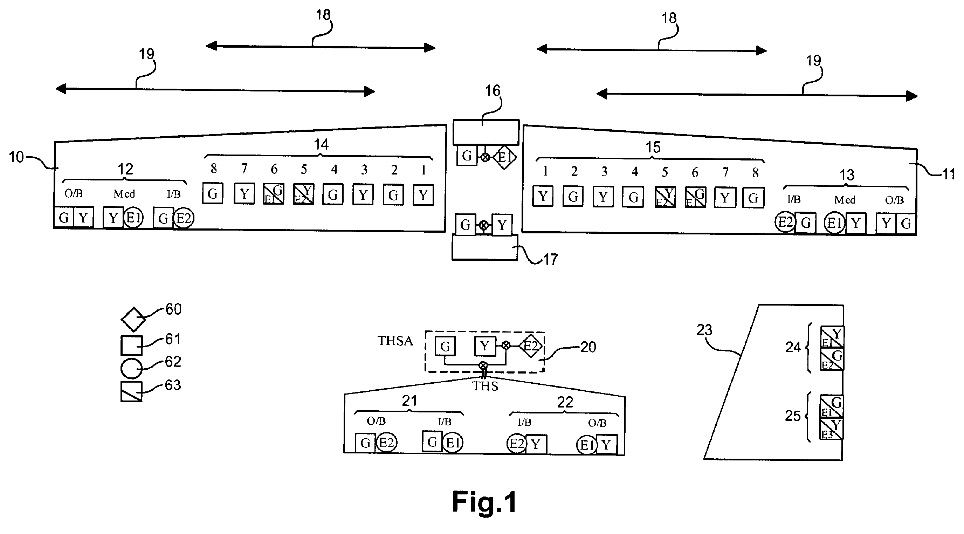

L'architecture de commandes de vol, représentée sur la figure 1, illustre le principe d'abonnement des énergies sur les actionneurs de commandes de vol d'un avion de l'art connu. Sur cette figure sont représentées les ailes 10 et 11 avec :
- des ailerons 12, 13,
- des spoilers 14, 15
- des becs (« slats ») 16
- des volets (« flats ») 17
   formant des freins de vitesse (spoilers au sol) 18 et des surfaces de roulis 19,
- un actionneur de plan horizontal stabilisateur réglable (THSA ou « Trimmable Horizontal Stabilizer Actuator ») 20,
- des gouvernes de profondeur
   (« elevators ») 21 et 22,
- un stabilisateur vertical 23 comprenant une gouverne de direction (« Rudder ») supérieure 24 et une gouverne de direction inférieure 25.

Sont également représentés en légende :
- les moteurs électriques 60,
- les servocommandes hydrauliques standard 61,
- les actionneurs électro-hydrostatiques (EHA) 62,
- les actionneurs hydrauliques à sauvegarde électrique (EBHA) 63.

Les lettres « G » (« green ») correspondent au système hydraulique vert. Les lettres « Y » (« yellow ») correspondent au système hydraulique jaune. Les lettres « B » (« blue ») correspondent au système hydraulique bleu.

Le terme « E1 » correspond à la puissance alternative E1. Le terme « E2 » correspond à la puissance alternative E2. Le terme « E3 » correspond à la puissance alternative E3.

Seule la troisième paire d'ailerons 12 (O/B) n'est actionnée que par des servocommandes hydrauliques.

Les concepteurs d'avions sont confrontés aux problèmes techniques suivantes :
- Structure carbone et voilures plus fines

L'utilisation du carbone en tant que matériau de structure réduit, par rapport à une structure métallique, le taux de transfert thermique avec l'actionneur. Ainsi, un actionneur placé dans un tel environnement est moins refroidi, ce qui peut nécessiter d'envisager des dispositifs de refroidissement supplémentaires. A fonctions et caractéristiques générales équivalentes, les actionneurs électriques actuels, du fait de la présence de moteurs électriques, d'équipements de transformation du mouvement de rotation en mouvement de translation et d'électronique de puissance qui demandent de plus à être refroidis, ont tendance à être plus volumineux que les servocommandes hydrauliques. Les voilures plus fines et à structure carbone sont donc doublement pénalisantes en terme de :
- confinement pouvant entraîner des difficultés d'intégration,
- transfert thermique avec la structure (moindre qu'avec une structure métallique) pouvant nécessiter des dispositifs de refroidissement supplémentaires) .

### - Réduction de la masse des systèmes

Au niveau des commandes de vol, les éléments de génération (pompes, réservoirs, collecteurs, lignes d'aspiration, de pressurisation, raccords, ...) ont un impact important dans le bilan global de masse des architectures actuelles.

### - Simplification de l'installation et de la maintenance des systèmes

D'une manière générale, la maintenance d'un équipement en zone fuselage est plus aisée qu'une opération en zone voilure et plus particulièrement sur la dérive de direction ou un plan horizontal en position haute. De plus, le coût d'un actionneur électrique, à fonctions similaires, est très supérieur à celui d'une servocommande hydraulique.

Pour réaliser une telle simplification, on doit tenir compte des facteurs suivants :

### • Installation des systèmes hydrauliques

L'installation des tuyauteries hydrauliques sur un avion est une tâche délicate et coûteuse dûe :
- aux alignements précis des raccords à respecter,
- aux règles de dispositions à respecter par rapport aux autres systèmes (protection),
- aux tests de vérification d'étanchéité à réaliser.

### • Maintenance des systèmes hydrauliques

La maintenance d'un système hydraulique demandant l'ouverture du circuit hydraulique requiert des opérations longues, nécessitant ainsi une immobilisation de l'avion prolongée, et coûteuse du fait de la nécessité :
- d'isolation du circuit ouvert,
- de protection des autres systèmes contre tout contact avec le fluide,
- de re-pressurisation et purge après intervention,
- de tests de vérification d'étanchéité.

### - Amélioration de la fiabilité des systèmes

Pour améliorer cette fiabilité, on doit tenir compte des facteurs suivantes :

### • Fiabilité des électroniques de puissance

Les facteurs majeurs entrant en jeu dans la dégradation de la fiabilité des électroniques de puissance sont les contraintes thermiques suivantes :
- la température, qui doit être gérée notamment dans le cas de fortes puissances,
- le nombre de cycles thermiques, liés aux cycles d'utilisation de l'avion, qui engendrent des contraintes mécaniques sur les éléments électroniques,
- les vibrations et les chocs.

L'utilisation d'un avion civil court-courrier signifie un taux de rotation élevé, ce qui a pour conséquence de multiplier les cycles thermiques et les vibrations ou chocs subis par les électroniques de puissance lors des atterrissages. L'utilisation d'un avion court-courrier a donc, de manière significative, des conséquences sur la fiabilité des électroniques de puissance, et ce d'autant plus lorsque l'on considère des électroniques situées en environnement sévère (cas pour celles des actionneurs électriques de commande de vol par exemple) et de ce fait augmenter la fréquence des opérations de maintenance.

### • Fiabilité des actionneurs électro-mécaniques

Les technologies d'actionneurs électro-mécaniques actuelles, outre le fait d'utiliser de l'électronique de puissance dont les problèmes de fiabilité ont été évoqués précédemment, présentent également des risques de grippage plus élevés que les servocommandes hydrauliques dû au fait de l'utilisation de dispositif de transformation de mouvement de rotation (moteur électrique) en mouvement de translation. Ainsi pour des actionneurs critiques vis-à-vis d'une panne de grippage, il faut utiliser des dispositifs supplémentaires pour réduire un tel risque, qui ont un impact conséquent sur le volume, la masse et le coût de l'actionneur.

L'invention a pour objet de résoudre ces différents problèmes en proposant un système de commande de vol plus électrique utilisant une génération électro-hydraulique locale permettant d'alimenter des servocommandes hydrauliques en remplacement d'actionneurs électriques.

### EXPOSÉ DE L'INVENTION

La présente invention concerne un système de commandes de vol plus électrique à bord d'un aéronef muni de surfaces de commande de vol et de moyens de commande de ces surfaces, qui comprend au moins un générateur électro-hydraulique local permettant d'alimenter des servocommandes hydrauliques liées à des surfaces de commande de vol caractérisé en ce que chaque générateur électro-hydraulique local comprend un moteur électrique qui est un moteur à induction alimenté par une tension alternative à fréquence fixe et valeur efficace constante de manière à fonctionner à vitesse constante.

Dans un premier mode de réalisation, les surfaces de commande de vol liées aux servocommandes alimentées par au moins un générateur électro-hydraulique comprennent les gouvernes de profondeur et de direction. Le système peut alors comprendre deux générateurs hydrauliques avantageusement logés dans la partie arrière de l'aéronef dans une zone qui n'est pas susceptible d'être atteinte par un éclatement moteur ou pneu.

Dans un second mode de réalisation, ces surfaces comprennent des surfaces situées sur la voilure (ou gouvernes de voilure), en particulier des ailerons et/ou des spoilers. Le système peut alors comprendre deux générateurs hydrauliques avantageusement logés dans la partie centrale de l'aéronef dans une zone qui n'est pas susceptible d'être atteinte par un éclatement moteur ou pneu.

Dans un troisième mode de réalisation, ces surfaces comprennent des gouvernes de voilure, de profondeur et de direction. Le système peut alors comprendre deux générateurs hydrauliques avantageusement logés dans la partie arrière ou centrale de l'aéronef.

Avantageusement, le système selon l'invention comprend une communalisation des électroniques de puissance vers un module électronique unique permettant l'alimentation des moteurs de la génération hydraulique, ce module électronique étant avantageusement logé en zone pressurisée.

Le système de l'invention présente de nombreux avantages, et notamment :
- une diminution de l'occurrence des pannes d'électronique de puissance,
- une réduction des opérations de maintenance en zone voilure et/ou plan vertical et/ou plan horizontal,
- une optimisation des coûts de maintenance.

### BRÈVE DESCRIPTION DES DESSINS

- La figure 1 illustre l'architecture de commande de vol d'un avion de l'art connu.
- La figure 2A illustre un premier mode de réalisation du système de l'invention, la figure 2B illustrant un mode de réalisation correspondant de l'art connu,
- La figure 3 illustre un troisième mode de réalisation du système de l'invention.

### EXPOSÉ DÉTAILLÉ DE MODES DE RÉALISATION PARTICULIERS

Le système de l'invention consiste à utiliser au moins une génération électro-hydraulique (HPP) locale permettant d'alimenter les servocommandes hydrauliques liées à des surfaces de commande de vol, en remplacement d'actionneurs électriques, dans une architecture de commande de vol plus électrique.

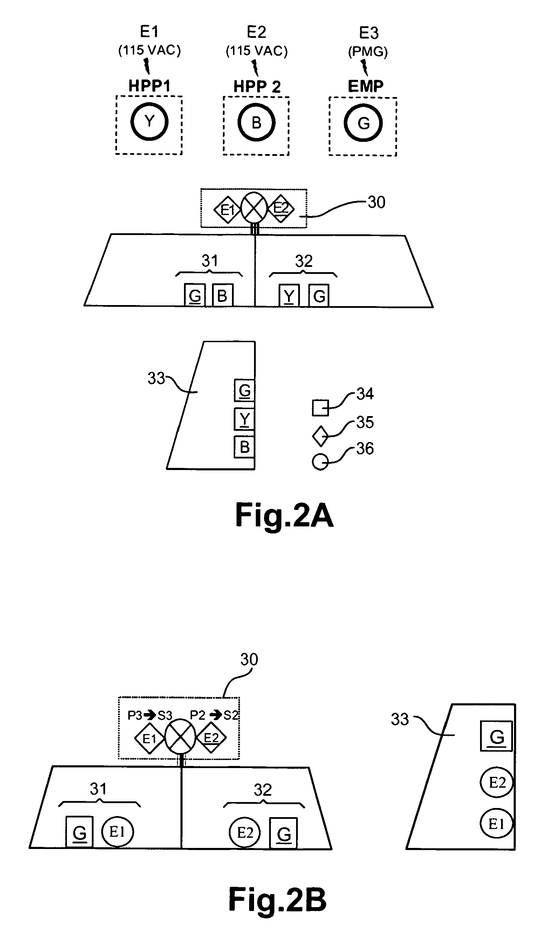

Dans un premier mode de réalisation, illustré sur la figure 2A, le système de l'invention comprend deux générateurs électro-hydrauliques HPP1 et HPP2 logés dans la partie arrière de l'avion, permettant d'alimenter les servocommandes hydrauliques de deuxième ligne sur les gouvernes de profondeur 31 et 32 et de direction 33. Les moteurs électriques de ces générateurs hydrauliques sont des moteurs à induction alimentés avec une tension alternative à fréquence fixe et valeur efficace constante (CV/FF). Les moteurs ainsi alimentés fonctionnent à vitesse de rotation constante. Ils n'ont pas besoin d'électronique de puissance sauf dans le cas où ce type de tension n'est pas disponible sur l'avion.

La figure 2A illustre ainsi le schéma de principe de l'utilisation de générations hydrauliques locale pour un empennage arrière. On a ainsi :
- deux générations hydrauliques locales HPP1 et HPP2,
- un circuit hydraulique central (pompe électro-motrice EMP),
- un moteur à induction pour chaque génération hydraulique locale,
- une alimentation :
   - à tension à courant alternatif (VAC) à fréquence fixe si disponible sur avion, ou sinon
   - avec utilisation d'électronique de puissance.

Une telle utilisation permet d'améliorer les coûts de maintenance directs :
- potentialité de ne pas avoir d'électronique de puissance pour les générations hydrauliques locales HPP1 et HPP2,
- possibilité de dupliquer les électroniques de puissance vers ces générations hdyrauliques locales HPP1 et HPP2,
- suppression des actionneurs électro-hydrostatiques.

Sur cette figure 2A, on retrouve également :
- un actionneur de plan horizontal stabilisateur réglable (THSA) 30,
- des gouvernes de profondeur 31 et 32,
- une gouverne de direction 33,
avec en légende :
- les servocommandes 34,
- les moteurs électriques 35,
- les générateurs hydrauliques 36.

La figure 2B illustre un rappel du principe initial avec les mêmes références que sur la figure 2A.

Le système de l'invention permet ainsi la communalisation des électroniques de puissances, distribuées à l'origine sur les actionneurs électriques, vers un module unique permettant l'alimentation des moteurs de la génération électro-hydraulique. Ce module électronique peut être localisé en zone fuselage plus accessible dans un environnement plus propice : pressurisé et climatisé améliorant ainsi la fiabilité de l'ensemble génération hydraulique + actionneur. Le système de l'invention permet également une communalisation des équipements de génération électro-hydraulique, à l'origine distribués sur les actionneurs électriques.

Le système de l'invention présente ainsi les avantages suivants :
- diminution de l'occurrence des pannes d'électroniques de puissance et d'équipements de génération électro-hydraulique,
- localisation des équipements de génération en zone fuselage plus accessible et donc réduction du nombre d'opération de maintenance en zone voilure,

- optimisation de la localisation des équipements de génération hydraulique en les rapprochant des réservoirs et des équipements de distribution hydrauliques,
- diminution de façon significative des longueurs et par conséquent des diamètres des lignes hydrauliques encombrantes : aspiration, case-drain et fourniture,
- suppression de toute installation d'équipement hydraulique de la zone moteur,
- optimisation des coûts de maintenance.

Dans un second mode de réalisation du système de l'invention, celui-ci comprend deux générateurs électro-hydrauliques permettant d'alimenter les servocommandes liées aux surfaces situées sur la voilure, par exemple les ailerons 44 et 45 et/ou les spoilers 42 et 43.

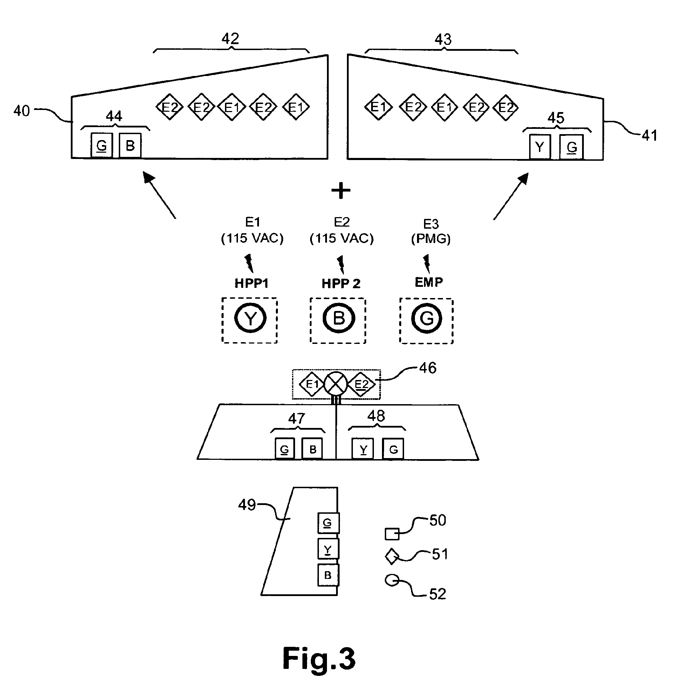

La figure 3 illustre un troisième mode de réalisation du système de l'invention, la génération électro-hydraulique étant utilisée alors pour commander l'empennage arrière 31, 32, 33 et les ailerons 44, 45. Ce troisième mode de réalisation est basé sur la même approche que le premier mode de réalisation en étendant le concept de remplacement des actionneurs électro-hydrostatiques par des servocommandes à tous les actionneurs électro-hydrostatiques présents dans l'architecture initiale. On a ainsi :
- deux générations hydrauliques locales HPP1 et HPP2,
- un circuit hydraulique central EMP,
- un moteur à induction pour chaque génération hydraulique locale,
- une alimentation :
   - à tension alternative à fréquence fixe si disponible sur avion, ou sinon
   - avec utilisation d'électronique de puissance.

L'extension aux ailerons permet d'obtenir une amélioration des coûts de maintenance directs du fait de la suppression des actionneurs électro-hydrostatiques (EHA).

Sur cette figure 3, sont illustrés les ailes 40 et 41, et :
- les spoilers 1 à 5, 42 et 43,
- les ailerons 44 et 45,
- un actionneur de plan horizontal stabilisateur réglable (THSA) 46,
- des gouvernes de profondeur 47 et 48,
- une gouverne de direction 49 avec en légence :
- les servocommandes 50,
- les moteurs électriques 51,
- les générateurs hydrauliques 52.

Ce troisième mode de réalisation présente les avantages du premier mode de réalisation listés plus haut.

## Revendications

1. Système de commandes de vol plus électrique à bord d'un aéronef muni de surfaces de commande de vol et de moyens de commande de ces surfaces, qui comprend au moins un générateur électro-hydraulique local (HPP1, HPP2) permettant d'alimenter des servocommandes hydrauliques (34) liées à des surfaces de commande de vol (31, 32, 33 ; 44, 45) **caractérisé en ce que** chaque générateur électro-hydraulique local comprend un moteur électrique qui est un moteur à induction alimenté par une tension alternative à fréquence fixe et valeur efficace constante de manière à fonctionner à vitesse constante.

2. Système selon la revendication 1, qui comprend au moins deux générateurs électro-hydrauliques locaux logés dans la partie arrière de l'avion.

3. Système selon l'une quelconque des revendications 1 ou 2, dans lequel les surfaces de commande de vol liées aux servocommandes alimentées par au moins un générateur électro-hydraulique comprennent les gouvernes de profondeur et de direction (31, 32, 33).

4. Système selon la revendication 3, dans lequel ces surfaces de commande de vol comprennent le plan horizontal stabilisateur.

5. Système selon l'une quelconque des revendications 1, 2 ou 3, dans lequel les surfaces de commande de vol liées aux servocommandes alimentées par au moins un générateur électro-hydraulique comprennent des surfaces situées sur la voilure.

6. Système selon la revendication 5, dans lequel ces surfaces situées sur la voilure comprennent les ailerons (44, 45) et/ou les spoilers (42, 43).

7. Système selon l'une quelconque des revendications 1 ou 2, comprenant une communalisation des électroniques de puissance vers un module électronique unique permettant l'alimentation des moteurs de la génération hydraulique.

8. Système selon la revendication 7, dans lequel ce module électronique est logé dans une zone pressurisée.

9. Aéronef comprenant un système selon l'une quelconque des revendications 1 à 8.

## Claims

1. More electric flight control system onboard an aircraft provided with flight control surfaces and means of controlling these surfaces, comprising at least one local electro-hydraulic generator (XPP1, HPP2) to supply hydraulic servocontrols (34) connected to flight control surfaces (31, 32, 33; 44, 45) **characterised in that** each local electro-hydraulic generator comprises an electric motor that is an induction motor powered by a fixed frequency AC voltage with a constant rms value so as to operate at a constant speed.

2. System according to claim 1, that comprises at least two electro-hydraulic generators located in the aft part of the aircraft.

3. System according to any one of claims 1 or 2, in which the flight control surfaces connected to servocontrols powered by at least one electro-hydraulic generator comprise elevators and rudders (31, 32, 33).

4. System according to claim 3, in which these flight control surfaces comprise the horizontal stabilise.

5. System according to any one of claims 1, 2 or 3, in which the flight control surfaces connected to servocontrols powered by at least one electro-hydraulic generator comprise surfaces located on the wing.

6. System according to claim 5, in which these surfaces located of the wing comprise the ailerons (44, 45) and/or spoilers (42, 43).

7. System according to any one of claims 1 or 2, comprising a community of power electronics leading to a single electronic module to supply hydraulic generation motors.

8. System according to claim 7, in which this electronic module is housed in a pressurised zone.

9. Aircraft comprising a system according to any one of claims 1 to 8.

## Patentansprüche

1. Stärker elektrisches bzw. eiektr-fiziertes Flugsteuerungssystem an Bord eines Luftfahrzeugs, das mit Flugsteuerflächen und Steuermitteln für diese Flächen ausgestattet ist, wobei das System mindestens einen lokalen elektro-hydraulischen Generator (HPP1, HPP2) aufweist, durch den hydraulische Servosteuerungen (34), die mit Flugsteuerflächen (31, 32, 33; 44, 45) verbunden sind, versorgt werden können,
**dadurch gekennzeichnet, dass** jeder lokale elektro-hydraulische Generator einen Elektromotor aufweist, der ein Induktionsmotor ist, der durch eine Wechselspannung mit fester Frequenz und konstantem Effektivwert derart versorgt wird, dass er mit konstanter Geschwindigkeit läuft.

2. System nach Anspruch 1, das mindestens zwei lokale elektro-hydraulische Generatoren aufweist, die sich im hinteren Teil des Flugzeugs befinden.

3. System nach einem der Ansprüche 1 oder 2, wobei die Flugsteuerflächen, die mit Servosteuerungen, die durch mindestens einen elektro-hydraulischen Generator versorgt werden, verbunden sind, die Höhen- und Seitenruder (31, 32, 33) umfassen.

4. System nach Anspruch 3, wobei die Flugsteuerflächen das Horizontal-Flächenleitwerk umfassen.

5. System nach einem der Ansprüche 1, 2 oder 3, wobei die Flugsteuerflächen, die mit den Servosteuerungen, die durch mindestens einen elektro-hydraulischen Generator versorgt werden, verbunden sind, an der Tragfläche befindliche Flächen umfassen.

6. System nach Anspruch 5, wobei die an der Tragfläche befindlichen Flächen die Querruder (44, 45) und/oder die Spoiler (42, 43) umfassen.

7. System nach einem der Ansprüche 1 oder 2, das eine Übertragung der Aufgaben von Leistungselektronikmodulen auf ein einziges Elektronikmodul, durch das Motoren zur Hydraulikerzeugung gespeist werden können, umfasst.

8. System nach Anspruch 7, wobei sich dieses Elektronikmodul in einer druckbeaufschlagten Zone befindet.

9. Luftfahrzeug, das ein System nach einem der Ansprüche 1 bis 8 aufweist.
